# EUROPEAN PATENT APPLICATION

(11) **EP 4 841 460 A1**
(43) Date of publication of application: **18.11.2026**
(21) Application number: 25217157.4
(22) Date of filing: 20.11.2025
(51) Int. Cl.: G06F 16/242, G06F 16/25, G06F 16/9032

(54) **SCALABLE INTELLIGENT ASSISTANT FOR INTERROGATION OF VARIOUS KNOWLEDGE SOURCES**

(30) Priority: 15.05.2025 US 202519209123
(71) Applicant: SAP SE, 69190 Walldorf (DE)
(72) Inventor: MOUREY, Nicolas, 69190 Walldorf (DE); SIRE, Philippe, 69190 Walldorf (DE); FRAPPIER, Andre, 69190 Walldorf (DE)
(74) Representative: Müller-Boré & Partner Patentanwälte PartG mbB

(57) **Abstract**

Embodiments of the present disclosure include techniques for scalable intelligent assistant for interrogation of various knowledge sources. In one embodiment, a system generates multiple data source entry point packages. Each package includes a function description and a tool-call function to query a specific type of data sources. The system receives a user prompt, retrieves multiple pre-defined function descriptions, queries an artificial intelligence (AI) system to identify a specific pre-defined function descriptions that corresponds to the user prompt, utilizes the AI system to extract parameters from both the user prompt and the identified function description, invokes a tool-call function that corresponds to the identified function description, executes the tool-call function using extracted parameters. The execution of the tool-call function generates a query specific to a data source to retrieve pertinent results, the results are transmitted to the AI system to generate a response to the user prompt.

## Description

### BACKGROUND

The present disclosure relates generally to computer software systems, and in particular, to a system and method of scalable intelligent assistant for interrogation of various knowledge sources.

Companies possess a wide array of knowledge data sources, which can include databases, file storage systems, and various other repositories of information. Employees often have access to a vast amount of information, making it challenging to locate appropriate data that the employees need. While it is possible to develop specialized applications tailored to retrieve and process information from a specific data source, each time there is a need to access another data repository, a completely new solution must be created. This may involve designing customized applications programming interfaces (APIs), adapting queries, or modifying the application's architecture to ensure seamless integration with the new data repository. As a result, while tailored solutions can enhance data retrieval for specific repositories, the necessity to build new systems for each additional data source can lead to increased complexity and development overhead as organizations strive to effectively utilize their diverse pools of information.

The following disclosure provides various technical solutions to overcome issues related to retrieving information from various data sources.

### BRIEF DESCRIPTION OF THE DRAWINGS

Fig. 1 illustrates a system for scalable intelligent assistant for interrogation of various knowledge sources according to an embodiment.
Fig. 2 illustrates a method for scalable intelligent assistant for interrogation of various knowledge sources according to an embodiment.
Fig. 3 illustrates an example flow of the system for scalable intelligent assistant for interrogation of various knowledge sources according to an embodiment.
Fig. 4 illustrates an example implementation of the system for scalable intelligent assistant for interrogation of various knowledge sources according to an embodiment.
Fig. 5 illustrates hardware of a special purpose computing system configured according to the above disclosure.

### DETAILED DESCRIPTION

Described herein are techniques for scalable intelligent assistant for interrogation of various knowledge sources. In the following description, for purposes of explanation, numerous examples and specific details are set forth in order to provide a thorough understanding of some embodiments. Various embodiments as defined by the claims may include some or all of the features in these examples alone or in combination with other features described below and may further include modifications and equivalents of the features and concepts described herein.

Some embodiments of the present disclosure pertain to Retriever-Augmented Generation (RAG). Advantages of some embodiments may enrich an AI model with a company's own data by leveraging various data sources. Some embodiments include an advantageous unified approach to implementing RAG, in order to avoid the need to develop specific solutions for each individual data source. These techniques enable a more streamlined, scalable, and efficient way to handle multiple data sources in a consistent manner.

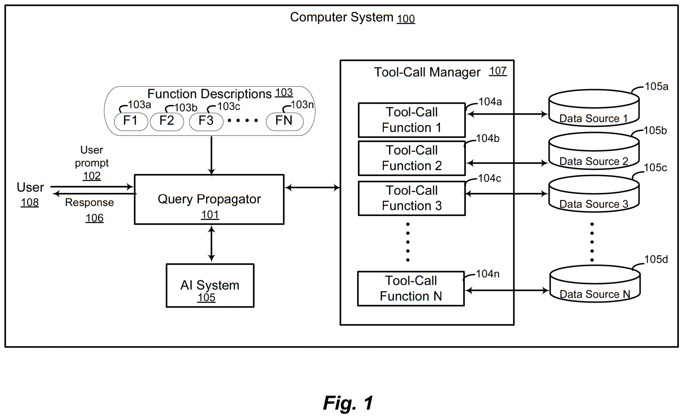

Fig. 1 illustrates a system for scalable intelligent assistant for interrogation of various knowledge sources according to an embodiment. Computer system 100 may include, for example, one or more computers comprising one or more processors and a computer readable medium (memory) for executing software to perform the techniques described herein. Here, embodiments of the present disclosure include techniques for retrieving information from various data sources, for example. Embodiments of the present disclosure overcome the technical challenges associated with building a new system to retrieve data for each additional data source. Further examples for overcoming the technical challenges are described in more detail below.

The system may generate multiple data source entry point packages. Each data source entry point package includes a function description 103a and a tool-call function 104a designed to query a specific type of data source. A query propagator 101 in the computer system 100 may receive a user prompt 102 from a user 103. The user prompt 102 may be questions or requests from the user 103. The query propagator 101 retrieves pre-defined function descriptions 103a-103n from a function description repository 103. The pre-defined function descriptions 103a-103n comprise of a function description name, parameters required for corresponding tool-call functions, a return type and a purpose. After retrieving the pre-defined function descriptions 103a-103n, the query propagator 101 queries an artificial intelligence (AI) system 105 to identify a function description that corresponds to the user prompt 102. When a function description matches the user prompt 102, the system 100 utilizes the AI system 105 to extract parameters from both the user prompt 102 and the identified function description 103a. The parameters comprise of input values required by a tool-call function 104a. The tool-call manager 107 invokes a tool-call function 104a from multiple available tool-call functions that correspond with the identified function description 103a. The tool-call function 104a queries a data source 105a designated to the tool-call function 104a to retrieve pertinent results. The data source 105a is one of several available data sources in the system 100. The retrieved results are transmitted to the AI system 105. The AI system 105 generates a response 106 to the user prompt 102 based on the retrieved results.

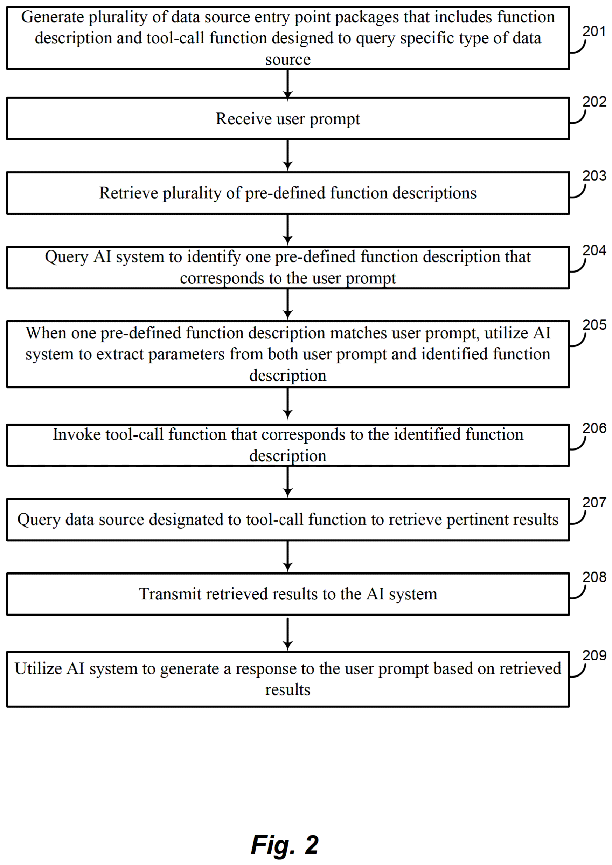

Fig. 2 illustrates a method for scalable intelligent assistant for interrogation of various knowledge sources according to an embodiment. At 201, the system generates multiple data source entry point package. Each data source entry point package includes a function description and a tool-call function designed to query a specific type of data source. At 202, the query propagator receives a user prompt. At 203, the query propagator retrieves multiple pre-defined function descriptions stored in a function description repository. At 204, the query propagator queries an AI system to identify a function description that corresponds to the user prompt. At 205, when a function description matches the user prompt, the AI system is used to extract parameters from both the user prompt and the identified function description. At 206, the tool-call manager invokes a tool-call function that corresponds to the identified function description. At 207, the tool-call function queries a data source designated to the tool-call function to retrieve pertinent results. At 208, the query propagator transmits the retrieved results to the AI system. At 209, the AI system generates a response to the user prompt based on the retrieved results.

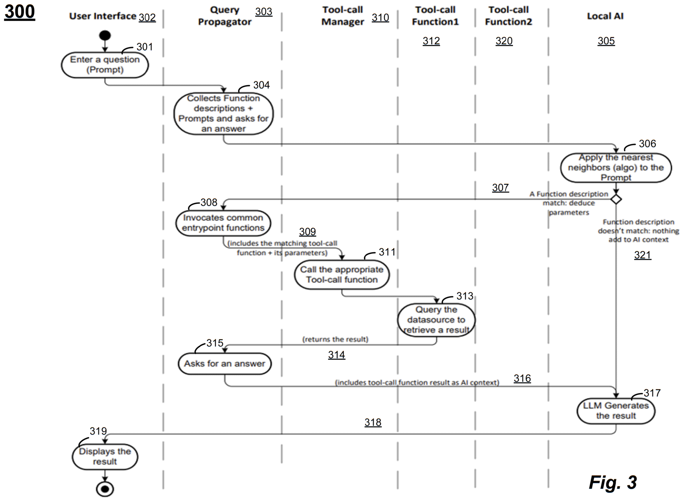

Fig. 3 illustrates an example flow of the system for scalable intelligent assistant for interrogation of various knowledge sources according to an embodiment. In the illustrated example, system 300 for interrogation of various knowledge sources (aka, data sources) is used to generate a response to a user prompt using information gathered from various data sources. In this example, at 301 a user enters a question or a prompt using a user interface 302. The prompt is sent to a query propagator 303. At 304, the query propagator retrieves multiple pre-defined function descriptions, the user prompt and queries the local AI 305 (aka, AI system) for a function description that matches the user prompt. At 306, the local AI 305 applies a nearest neighbor algorithm to the user prompt to find the most relevant function description to the user prompt. Both the user prompt and the function descriptions are vectorized (e.g., transformed into numerical vectors) to represent the text in a quantitative format. The nearest neighbor (NN) algorithm calculates the distance between the vector of the user prompt and the vectors of the function descriptions in the vector space. Example of distance metrics include Euclidean distance or cosine similarity. The NN algorithm identifies the function description that is closest to the user prompt based on the calculated distances to determine the most relevant function for the user prompt. However, in some examples, other similarity measurement algorithms may also be used. If a function description matches the user prompt, at 307 the extracted parameters are sent to the query propagator 303. At 308, upon receiving the parameters, the query propagator 303 invokes common entry point function. The common entry point function is responsible for incorporating the appropriate matching tool-call functions along with the received parameters. At 309, the query propagator forwards the extracted parameters to the tool-call manager 310 for further processing. At 311, the tool-call manager 310 calls the appropriate tool-call function1 312 among multiple tool-call functions (e.g., tool-call function1 312, tool-call function2 320, etc.). The tool-call function requires inputs (aka, extracted parameters) for the tool to function (e.g., to query a database and return a result).

At 313, the tool-call function 312 query a data source to retrieve pertinent results. In this example, the tool-call function generates queries tailored to specific data sources, enabling system 300 to interact with a variety of information repositories. In some examples, the query may be a structured query language (SQL) command query intended for databases. In some examples, the query can be an application programming interface (API) call intended for web services or external services over Hypertext Transfer Protocols (HTTPs). Additionally, the query may be formatted to meet the specific requirements of the designated data source, such as specialized or proprietary data sources. For example, some data sources may require queries that adhere to specific formats or protocols unique to their architecture. This may include formats like Extensible Markup Language (XML), JavaScript Object Notation (JSON), or custom serialization formats. In some examples, the query may be formatted to ensure compatibility with the data source. For example, the query is formatted to be suitable for interfacing with diverse data sources that may follow standard protocols, such as Open Data Protocol (OData) or Graph Query Language (GraphQL). These various tool-call functions enable the system 300 to query multiple data sources based on matching the user prompt to the function descriptions available within the system 300.

The tool-call function complies with a contract that represents a common set of APIs, enabling a consistent interface with a variety of data sources. The tool-call function provides a standardized method for data retrieval and manipulation across these diverse sources, ensuring uniform data formatting and data types for both requests and responses based on user prompts. This approach not only streamlines interactions with the data sources but also enables a cohesive error handling protocol that is consistent across all data sources. Furthermore, the tool-call function adheres to specified authentication and authorization mechanisms that are common to the API set, thereby ensuring secure access and interaction with the underlying data. This comprehensive framework promotes reliability, maintainability and scalability, allowing developers to seamlessly integrate multiple data sources into their applications.

At 314, the tool-call function 312 returns the result to the query propagator 303. At 315, the query propagator 303 asks the local AI 305 for an answer. At 316, the query propagator 303 sends the results of the tool-call function as contextual information to the local AI 305. The contextual information includes relevant data and insights derived from the tool-call function 312 that helps the local AI 305 better answer the user queries (aka, user prompt). At 317, the local AI 305 employs a Large Language Model (LLM) to generate context-specific responses based on user prompts. The LLM analyzes the input (e.g., user prompt and retrieved results) and leverages the retrieved results to produce relevant, coherent, and contextually appropriate output. This process enables the local AI to effectively interpret the user's intent and deliver meaningful results tailored to the user's needs. At 318, the local AI 305 sends the results to the user interface 302. At 319, the user interface 302 displays the result to the user.

Returning to 306, if the local AI 305 does not find a pre-defined function description that matches or corresponds to the user prompt, at 321, no information is added to the AI context and the user prompt is forwarded to the LLM to generate a response utilizing the existing knowledge stored within the LLM.

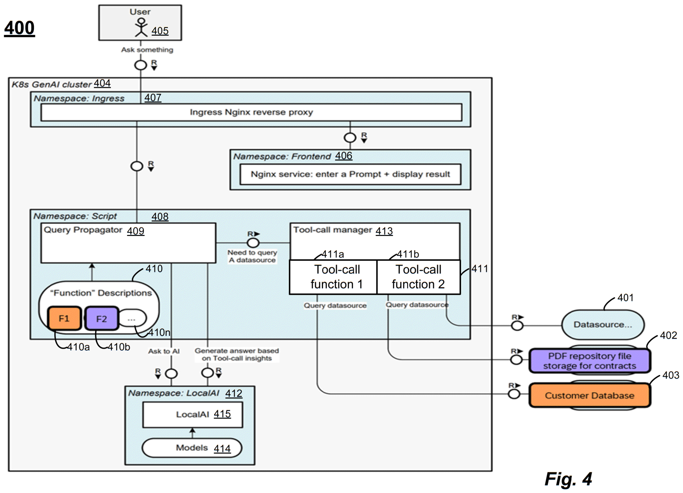

Fig. 4 illustrates an example implementation of the system for scalable intelligent assistant for interrogation of various knowledge sources according to an embodiment. In the illustrated example, system 400 for retrieving data from various knowledge sources 401-403 that operates on a Kubernetes (k8s) cluster 404. In this example, the process begins when a user 405 enters a prompt of, "give me the top 10 sales last month" through the Frontend Nginx Service 406. The Frontend Nginx Service 406 acts as the user interface for submitting queries. Within the Frontend namespace, the Frontend Nginx Service receives the user prompt and formats the user prompt as needed for processing. The user prompt is routed through the Ingress Nginx Reverse Proxy namespace 407. The Ingress namespace 407 manages incoming traffic and directs the requests to the appropriate service within the k8s cluster 404. The Frontend Nginx Service 406 then forwards the user prompts to Script namespace 408 for processing.

Script namespace 408 is a processing environment that handles incoming requests from the user 405. In Script namespace 408, a query propagator function 409 is invoked. This query propagator function 409 takes the user prompt and determines which data sources need to be queried based on the content of the prompt.

In this example, to extend the system's capability to utilize new data sources, a developer can create data source entry point packages. Each data source entry point package contains a function description 410 and a tool-call function 411. The function description 410 includes specification of the function for querying a corresponding data source. The tool-call function includes implementations that can interact with the specific data source. Each package must include a script (e.g., a code or a defined set of functions) that fulfills a common set of API contracts, ensuring interoperability and standardization across various data sources.

The essential API contract requires each package to implement a "run(parameter)" function (aka, script). The "run(parameter)" function serves as a standardized API entry point that initiates a query operation against a particular data source. The "run(parameter)" function primary goal is to allow other components or services within the system 400 to execute queries or commands dynamically based on user prompts. The function accepts a list of parameters that are necessary for executing the query. These parameters can dictate various aspects of the query, including filter conditions, limits, or specific fields to retrieve based on the user's request. An important feature for security in the "run(parameter)" function is that the function accepts a user token or another form of authentication credentials to restrict access to user data. The user token is critical for verifying identity of the user making the request and ensuring that access to sensitive data is appropriately controlled and restricted.

Each data source entry point package may implement common error management procedures. This includes catching exceptions that may occur during the querying process. This can also include managing errors by returning meaningful error messages without exposing sensitive information. Additionally, common error management procedures may also include logging errors appropriately for further analysis and debugging.

Each data source entry point package may have its own settings and procedures to retrieve the required credentials securely. This may include storing connection strings, authentication keys, or any sensitive information in a secure storage area. The data source entry point package may implement logic to access these credentials dynamically at runtime, ensuring that sensitive data is managed securely and is only accessible to authorized components within the system.

Within each data source entry point package, modules must know how to appropriately query their specific data sources. This may include generating SQL queries for relational databases, accessing and retrieving files from a file storage system and invoking APIs for external services.

Returning to the query propagator 409, after the query propagator 409 retrieves various defined function descriptions 410a-410n in the data source entry point packages, the query propagator 409 asks the Local AI namespace 412 to utilize the defined function descriptions 410 to identify a function description that matches the user prompt. The local AI 415 vectorize the user prompt or question and compares the user prompt to the function descriptions. When a function description is identified as matching the user prompt, the function description is used to retrieve information from an external data source to respond to the user prompt. A tool-call manager 413 orchestrates the tool-call functions 411. The tool-call functions 411 are designed to interact with different data sources 401-403. This may include invoking APIs or querying databases to retrieve relevant data. The tool-call manager 413 sends requests to the appropriate data sources, leveraging the tool-call functions to gather the necessary information. The responses from these data sources may include structured data, documents, or other relevant content. For example, the user prompt, "give me the top 10 sales last month" may result in the local AI 415 identifying two function description that matches the user prompt. The first data source entry point package with function description F1 410a may be able to handle query to a customer database 403 using tool-call function 1 411a. A second data source entry point package with function description F2 410b maybe able to handle query for PDF repository file of "scanned contracts" images 402 using tool-call function 411b. With the data source entry point package, the system can query various external data sources to retrieve up-to-date information to generate a more accurate and contextually relevant response to the user.

Once the data is retrieved, the system 400 may route this information to the Local AI namespace 412, which houses the local AI models 414 designed to process, analyze, and interpret the data. The AI models 414 apply natural language processing and other AI techniques to generate a coherent response based on the retrieved data. The local AI 415 utilizes the processed data to craft an informative and context-specific response to the user's initial prompt. This response is then sent back through system 400. The formatted response is routed back through the Script namespace 408 to the Frontend Nginx Service 406, which presents the completed response to the user via the user interface.

This system ensures that user prompts are effectively processed, utilizing local AI to integrate results retrieved from various knowledge sources to enhance the response generated, making it more relevant and insightful.

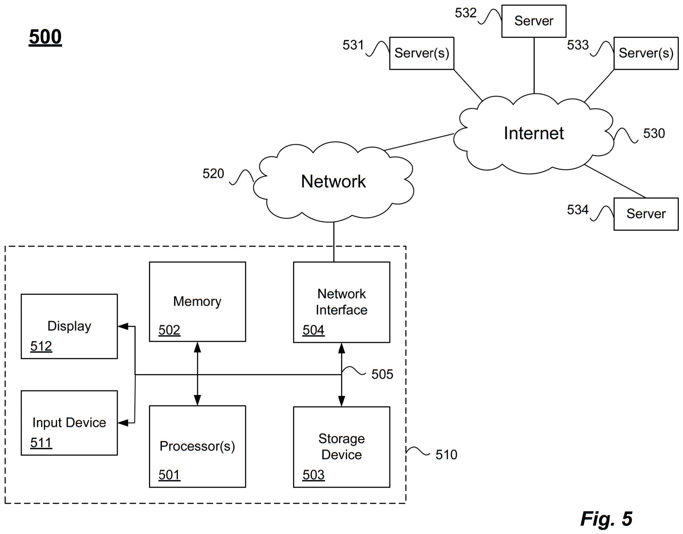

Fig. 5 illustrates hardware of a special purpose computing system 500 configured according to the above disclosure. The following hardware description is merely one example. It is to be understood that a variety of computers topologies may be used to implement the above-described techniques. An example computer system 510 is illustrated in Fig. 5. Computer system 510 includes a bus 505 or other communication mechanism for communicating information, and one or more processor(s) 501 coupled with bus 505 for processing information. Computer system 510 also includes memory 502 coupled to bus 505 for storing information and instructions to be executed by processor 501, including information and instructions for performing some of the techniques described above, for example. Memory 502 may also be used for storing programs executed by processor(s) 501. Possible implementations of memory 502 may be, but are not limited to, random access memory (RAM), read only memory (ROM), or both. A storage device 503 is also provided for storing information and instructions. Common forms of storage devices include, for example, a hard drive, a magnetic disk, an optical disk, a CD-ROM, a DVD, solid state disk, a flash or other non-volatile memory, a USB memory card, or any other electronic storage medium from which a computer can read. Storage device 503 may include source code, binary code, or software files for performing the techniques above, for example. Storage device 503 and memory 502 are both examples of non-transitory computer readable storage mediums (aka, storage media).

In some systems, computer system 510 may be coupled via bus 505 to a display 512 for displaying information to a computer user. An input device 511 such as a keyboard, touchscreen, and/or mouse is coupled to bus 505 for communicating information and command selections from the user to processor 501. The combination of these components allows the user to communicate with the system. In some systems, bus 505 represents multiple specialized buses for coupling various components of the computer together, for example.

Computer system 510 also includes a network interface 504 coupled with bus 505. Network interface 504 may provide two-way data communication between computer system 510 and a local network 520. Network 520 may represent one or multiple networking technologies, such as Ethernet, local wireless networks (e.g., WiFi), or cellular networks, for example. The network interface 504 may be a wireless or wired connection, for example. Computer system 510 can send and receive information through the network interface 504 across a wired or wireless local area network, an Intranet, or a cellular network to the Internet 530, for example. In some embodiments, a frontend (e.g., a browser), for example, may access data and features on backend software systems that may reside on multiple different hardware servers on-prem 531 or across the network 530 (e.g., an Extranet or the Internet) on servers 532-534. One or more of servers 532-534 may also reside in a cloud computing environment, for example.

### FURTHER EXAMPLES

Each of the following non-limiting features in the following examples may stand on its own or may be combined in various permutations or combinations with one or more of the other features in the examples below. In various embodiments, the present disclosure may be implemented as a system, method, or computer readable medium.

Embodiments of the present disclosure may include systems, methods, or computer readable media. In one embodiment, the present disclosure includes computer system comprising: at least one processor and at least one non-transitory computer readable medium (e.g., memory) storing computer executable instructions that, when executed by the at least one processor, cause the computer system to perform methods as described herein and in the following examples. In another embodiment, the present disclosure includes a non-transitory computer-readable medium storing computer-executable instructions that, when executed by at least one processor, perform the methods as described herein and in the following examples.

In one embodiment, the present disclosure includes a computer implemented method comprising: generating a plurality of data source entry point packages, wherein each data source entry point package includes a function description and a tool-call function designed to query a specific type of data source, receiving a user prompt, retrieving a plurality of pre-defined function descriptions, querying an artificial intelligence (AI) system to identify a specific one of the plurality of pre-defined function descriptions that corresponds to the user prompt, utilizing the AI system to extract parameters from both the user prompt and the identified function description, invoking a tool-call function from a plurality of tool-call function that corresponds to the identified function description, executing the tool-call function using the extracted parameters, wherein the execution of the tool-call function comprises generating a query specific to a designated data source among a plurality of data sources to retrieve pertinent results, transmitting the retrieved results to the AI system, and generating a response to the user prompt utilizing the AI system based on the retrieved results.

In one embodiment, the function description comprises of a name, parameters for the tool-call function, a return type and a purpose.

In one embodiment, identifying the specific one of the plurality of pre-defined function descriptions that corresponds to the user prompt, further comprising applying a nearest neighbor algorithm to identify a matching function description based on the user prompt.

In one embodiment, the parameters comprise of input values required by the tool-call function.

In one embodiment, the AI system generates the response that is context-specific to the user prompt utilizing a large language model.

In one embodiment, wherein to query a specific type of data source, the query includes at least one of, i) a structured query language (SQL) command query, ii) an application programming interface (API) call, iii) a query format adapted to specific requirements of the designated data source, or iv) any other query format that is compatible with the designated data source.

In one embodiment, the plurality of tool-call functions satisfies a contract of a common set of application programming interfaces (APIs), facilitating consistent interfacing with the plurality of data sources by providing standardized methods for data retrieval and manipulation across the plurality of data sources, ensuring uniform data formatting and data types for requests based on the user prompt and responses, enabling error handling protocols that are consistent across the plurality of data sources, and adhering to specified authentication and authorization mechanisms common to the set of APIs.

In one embodiment, the method further comprises utilizing knowledge stored within the AI system to generate the response when the pre-defined function descriptions do not correspond to the user prompt.

The above description illustrates various embodiments along with examples of how aspects of some embodiments may be implemented. The above examples and embodiments should not be deemed to be the only embodiments and are presented to illustrate the flexibility and advantages of some embodiments as defined by the following claims. Based on the above disclosure and the following claims, other arrangements, embodiments, implementations, and equivalents may be employed without departing from the scope hereof as defined by the claims.

## Claims

1. A computer implemented method comprising:
generating a plurality of data source entry point packages, wherein each data source entry point package includes a function description and a tool-call function designed to query a specific type of data source;
receiving a user prompt;
retrieving a plurality of pre-defined function descriptions;
querying an artificial intelligence (AI) system to identify one of the plurality of pre-defined function descriptions that corresponds to the user prompt;
when the one of the plurality of pre-defined function descriptions matches the user prompt, utilizing the AI system to extract parameters from both the user prompt and the identified function description;
invoking a tool-call function from a plurality of tool-call functions that corresponds to the identified function description;
querying a data source designated to the tool-call function among a plurality of data sources to retrieve pertinent results;
transmitting the retrieved results to the AI system; and
utilizing the AI system to generate a response to the user prompt based on the retrieved results.

2. The method of claim 1, wherein the function description comprises a name, parameters for the tool-call function, a return type and a purpose.

3. The method of claim 1 or 2, wherein identifying the one of the plurality of pre-defined function descriptions that corresponds to the user prompt, further comprising applying a nearest neighbor algorithm to identify a matching function description based on the user prompt.

4. The method of any one of claims 1 to 3, wherein the parameters comprise input values required by the tool-call function.

5. The method of any one of claims 1 to 4, wherein the AI system generates the response that is context-specific to the user prompt utilizing a large language model.

6. The method of any one of claims 1 to 5, wherein to query a specific type of data source, the query includes at least one of i) a structured query language (SQL) command query, ii) an application programming interface (API) call, iii) a query format configured to meet specific requirements of the designated data source, or iv) a query format that is compatible with the designated data source.

7. The method of any one of claims 1 to 6, wherein the plurality of tool-call functions complies with a contract comprising a common set of application programming interfaces (APIs), configured to provide a consistent interface with the plurality of data sources by:
providing standardized methods for data retrieval and manipulation across the plurality of data sources;
ensuring uniform data formatting and data types for requests based on the user prompt and responses;
enabling error handling protocols that are consistent across the plurality of data sources; and
adhering to specified authentication and authorization mechanisms common to the set of APIs.

8. The method of any one of claims 1 to 7, further comprising utilizing knowledge stored in the AI system to generate the response when the pre-defined function descriptions do not correspond to the user prompt.

9. A computer system comprising:
at least one processor;
at least one non-transitory computer-readable medium storing computer-executable instructions that, when executed by the at least one processor, cause the computer system to execute a method according to any one of claims 1 to 8.

10. A non-transitory computer-readable medium storing computer-executable instructions that, when executed by at least one processor of a computer system, cause the computer system to execute a method according to any one of claims 1 to 8.
